(19)

**Europäisches Patentamt**

**European Patent Office**

**Office européen des brevets**

(11) Publication number: **0 508 431 B1**

## EUROPEAN PATENT SPECIFICATION

(45) Date of publication of patent specification: **15.11.95**    (51) Int. Cl.⁶: **B62D 7/15**, //B60K28/16

(21) Application number: **92106178.4**

(22) Date of filing: **09.04.92**

(54) **Rear wheel turning system for four-wheel-steered vehicle.**

(30) Priority: **09.04.91 JP 103429/91**
**09.04.91 JP 103430/91**

(43) Date of publication of application:
**14.10.92 Bulletin 92/42**

(45) Publication of the grant of the patent:
**15.11.95 Bulletin 95/46**

(84) Designated Contracting States:
**DE FR GB**

(56) References cited:
**EP-A- 0 208 173**
**DE-A- 3 908 164**
**US-A- 4 971 174**

(73) Proprietor: **Mazda Motor Corporation**
**No. 3-1, Shinchi**
**Fuchu-cho**
**Aki-gun**
**Hiroshima-ken (JP)**

(72) Inventor: **Akita, Ryuya**
**c/o MAZDA MOTOR CORP.,**
**No. 3-1, Shinchi,**
**Fuchu-cho**
**Aki-gun,**
**Hiroshima-ken (JP)**

Inventor: **Kageyama, Fumio**
**c/o MAZDA MOTOR CORP.,**
**No. 3-1, Shinchi,**
**Fuchu-cho**
**Aki-gun,**
**Hiroshima-ken (JP)**
Inventor: **Ohmura, Hiroshi**
**c/o MAZDA MOTOR CORP.,**
**No. 3-1, Shinchi,**
**Fuchu-cho**
**Aki-gun,**
**Hiroshima-ken (JP)**
Inventor: **Murai, Takeshi**
**c/o MAZDA MOTOR CORP.,**
**No. 3-1, Shinchi,**
**Fuchu-cho**
**Aki-gun,**
**Hiroshima-ken (JP)**
Inventor: **Nohda, Hiroyuki**
**c/o MAZDA MOTOR CORP.,**
**No. 3-1, Shinchi,**
**Fuchu-cho**
**Aki-gun,**
**Hiroshima-ken (JP)**

(74) Representative: **Müller-Boré & Partner Patentanwälte**
**Grafinger Strasse 2**
**D-81671 München (DE)**

## Description

## BACKGROUND OF THE INVENTION

### Field of the Invention

This invention relates to rear wheel turning systems for a four-wheel-steered vehicle according to the precharacterizing parts of claims 1 and 6, respectively.

### Description of the Prior Art

Document US-A-4,971,174 discloses a controlling system which controls a steering performance of a four-wheel steering motor vehicle in combination with an anti-skid brake system (ABS), such that the steering ratio is prevented from varying when the running speed is reduced during the operation of the ABS. Specifically, when the one-map searching, which determines the steering angle ratio and the steering phase of the rear wheels to the front wheel, is carried out on the basis of a characteristic graph showing the steering value of the vehicle, speed is corrected so as to prevent the vehicle speed from varying, and the steering angle is prevented from varying thereby.

US Patent 4,971,174 discloses a speed-sensitive four-wheel-steered vehicle in which the rear wheels are turned in the direction opposite to the front wheels (the reverse phase) when the vehicle speed is low and in the same direction as the front wheels (the same phase) when the vehicle speed is high whereby the turning angle of the rear wheels is changed according to the turning angle of the front wheels and the vehicle speed.

Further, there has been known an anti-skid brake system (will be abbreviated as an ABS hereinbelow) which detects fall in the rotational speed of each wheel during braking and controls the brake fluid pressure for each wheel to hold the rotational speed of the wheel at a speed at which the friction between the road surface and the wheel is maximized, thereby preventing skid or lock of the wheel during hard braking or braking on a low $\mu$ road.

A traction control system (will be abbreviated as a TRC system hereinbelow) which is known from US Patent 4,750,125 detects slip of the driving wheels during starting or hard acceleration and controls the throttle opening of the engine and/or the brake fluid pressure to the driving wheels so that the friction between the road surface and the driving wheels is maximized, thereby obtaining an optimal road gripping force of the driving wheels during starting or hard acceleration.

It has been proposed to control the rear wheel turning system in combination with the ABS so that the rear wheel turning characteristic is changed according to whether the ABS is operating in order to further improve the driving stability during hard braking. For example, as disclosed in US Patent 4,733,878, the rear wheel turning characteristic for the normal running which has been defined as a function of the vehicle speed or the like is changed to shift toward the same phase side, thereby preventing drift of the tail during hard braking.

However when the rear wheel turning characteristic is changed according to whether the ABS is operating, the rear wheel turning characteristic can be frequently changed to cause hunting in the case where the brakes are applied on a road whose friction coefficient changes frequently, thereby deteriorating the running stability of the vehicle.

## SUMMARY OF THE INVENTION

In view of the foregoing observations and description, the primary object of the present invention is to provide a rear wheel turning system for a four-wheel-steered vehicle having a slip control system such as an ABS or a TRC which can ensure running stability of the vehicle when operation of the slip control system is interrupted.

According to a first embodiment of the present invention claimed in claim 1, there is provided a rear wheel turning system for a four-wheel-steered vehicle provided with a slip control system such as an antiskid brake system or a traction control system comprising a rear wheel turning mechanism which turns rear wheels of the vehicle in response to turning of front wheels of the vehicle according to a predetermined rear wheel turning characteristic, a rear wheel turning characteristic correcting means which corrects the rear wheel turning characteristic substantially in response to initiation of operation of the slip control system, and a correction holding means (timer) to hold the corrected rear wheel turning characteristic until a predetermined condition is satisfied after interruption of the operation of the slip control system, wherein said rear wheel turning mechanism turns rear wheels of the vehicle on the basis of the corrected rear wheel turning characteristic until the predetermined condition is satisfied after interruption of the operation of the slip control system.

For example, the correction holding means holds the corrected rear wheel turning characteristic until a predetermined time lapses after interruption of the operation of the slip control system. In the case where the slip control system is an ABS, the correction holding means may do so until the deceleration of the vehicle continues to be smaller than a predetermined value for a predetermined time with the brake pedal pushed down. In the case where the slip control system is a TRC system, the correction holding means may do so until the acceleration of the vehicle continues to be larger than a predetermined value for a predetermined time with the accelerator pedal pushed down.

With this arrangement, the rear wheel turning characteristic cannot be changed soon after interruption of the operation of the slip control system and accordingly hunting of the system upon interruption of the operation of the slip control system is prevented, whereby running stability of the vehicle can be ensured.

According to a second embodiment of the present invention claimed in claim 6, there is provided a rear wheel turning system for a four-wheel-steered vehicle provided with a slip control system such as an antiskid brake system or a traction control system comprising a rear wheel turning mechanism which turns rear wheels of the vehicle in response to turning of front wheels of the vehicle according to a predetermined rear wheel turning characteristic, a first correcting means which corrects the rear wheel turning characteristic substantially in response to initiation of operation of the slip control system, a second correcting means which corrects the rear wheel turning characteristic on the basis of the road surface condition determined during operation of the slip control system, and a correction holding means (timer) to hold the rear wheel turning characteristic which is corrected by the second correcting means and which has been corrected by the first correcting means, said corrected rear wheel turning characteristic being further corrected by the second correcting means after the operation of the slip control system is interrupted, and said rear wheel turning mechanism turning the rear wheels of the vehicle on the basis of the rear wheel turning characteristic, which is corrected by the second correcting means after the operation of the slip control system is interrupted.

With this arrangement, the rear wheel turning characteristic cannot be largely changed soon after interruption of the operation of the slip control system and accordingly, change in behavior of the vehicle is prevented and the running stability is ensured.

BRIEF DESCRIPTION OF THE DRAWINGS

Figure 1 is a schematic view showing a four-wheel-steered vehicle provided with a rear wheel turning system in accordance with an embodiment of the present invention,
Figure 2 is a schematic view showing an antiskid brake system provided in the vehicle shown in Figure 1,
Figure 3 is a view showing the rear wheel turning characteristics used in the vehicle shown in Figure 1,
Figure 4 is a map showing the relation between the friction coefficient μ of the road surface and the rear wheel turning angle ratio correction value,
Figures 5 and 6 show a flow chart for illustrating the rear wheel turning angle ratio correction routine executed by the rear wheel control unit,
Figures 7 and 8 show a flow chart for illustrating the rear wheel turning angle ratio correction routine executed by the rear wheel control unit in another embodiment of the present invention and,
Figure 9 shows a flow chart for illustrating the rear wheel turning angle ratio correction routine executed by the rear wheel control unit in still another embodiment of the present invention.

DESCRIPTION OF THE PREFERRED EMBODIMENT

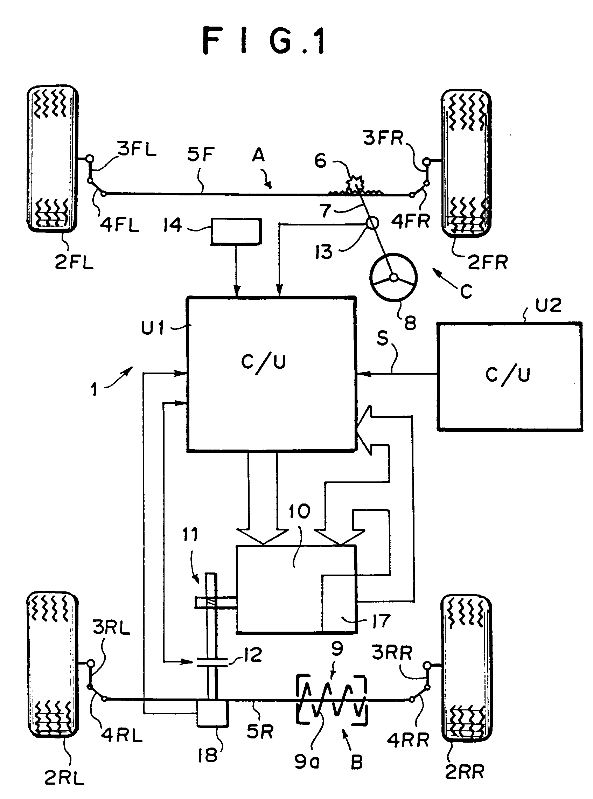

In Figure 1, left and right front wheels 2FL and 2FR of a vehicle 1 are turned by a front wheel turning mechanism A and left and right rear wheels 2RL and 2RR of the vehicle 1 are turned by a rear wheel turning mechanism B.

The front wheel turning mechanism A comprises a pair of knuckle arms 3FL and 3FR, a pair of tie rods 4FL and 4FR and a relay rod 5F which connects the tie rods 4FL and 4FR. The front wheel turning mechanism A is connected to a steering wheel 8 by way of a steering mechanism C having a rack (not shown) provided on the relay rod 5F and a pinion 6 provided on a steering shaft 7.

The rear wheel turning mechanism B comprises a pair of knuckle arms 3RL and 3RR, a pair of tie rods 4RL and 4RR, a relay rod 5R which connects the tie rods 4RL and 4RR, a servomotor 10, and a transmission mechanism 11 which transmits the driving force of the servomotor 10 to the relay rod 5R.

Further the rear wheel turning mechanism B has a fail-safe mechanism comprising a clutch 12 for connecting and disconnecting the servomotor 10 and the relay rod 5R and a neutralizing means 9 having a spring 9a which urges the relay rod 5R to the neutral position in which it holds the rear wheels 2RL and 2RR in the straight ahead position. In the case of failure of the rear wheel turning mechanism B, e.g., when the servomotor 10 fails, the clutch 12 is disengaged and the relay rod 5R is held in the neutral position under the force of the spring 9a of the neutralizing means 9 so that the vehicle 1 behaves as a two-wheel-steered vehicle.

The vehicle 1 is further provided with a steering angle sensor 13 for detecting the turning angle of the steering wheel 8, a vehicle speed sensor 14 which detects the speed of the vehicle, an encoder 17 for detecting the angular position of the servomotor 10, and a rear wheel turning angle sensor 18 which detects the turning angle of the rear wheels 2RL and 2RR through the position of the relay rod 5R. A rear wheel control unit U1 controls the servomotor 10 on the basis of the outputs of the steering angle sensor 13, the vehicle speed sensor 14, the encoder 17 and the rear wheel turning angle sensor 18.

The rear wheel control unit U1 is provided with a vehicle-speed sensitive rear wheel turning angle control system which sets the rear wheel turning angle ratio K ($=\theta R/\theta F$, wherein $\theta R$ represents the turning angle of the rear wheels and $\theta F$ represents the turning angle of the front wheels) according to a predetermined rear wheel turning angle ratio characteristic as a function of the vehicle speed V, and determines a target rear wheel turning angle on the basis of the rear wheel turning angle ratio K thus set and the the turning angle $\theta H$ of the steering wheel 8 detected by the steering angle sensor 13.

The rear wheel control unit U1 controls the servomotor 10 according to the target rear wheel turning angle to turn the rear wheels 2RL and 2RR while watching the positions of the servomotor 10 and the relay rod 5R respectively by way of the encoder 17 and the rear wheel turning angle sensor 18.

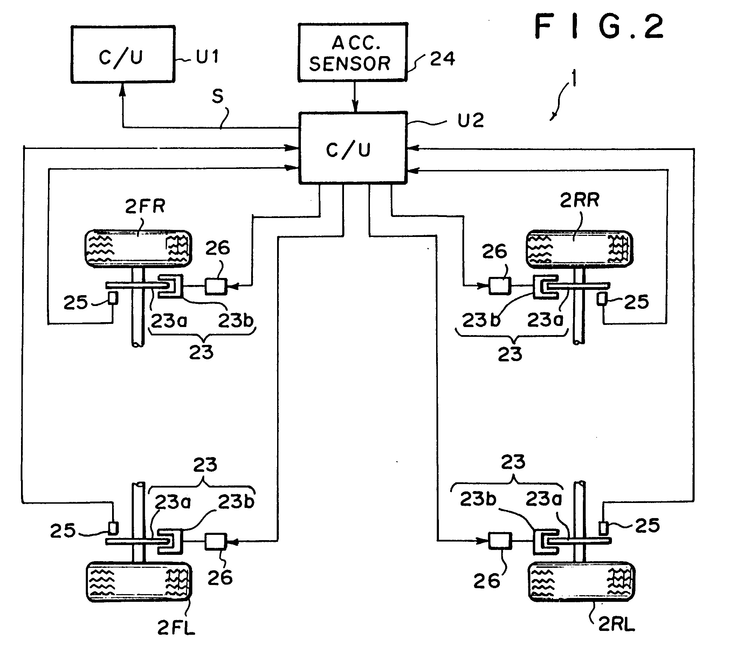

The vehicle 1 is provided with an anti-skid brake system shown in Figure 2 as the slip control system.

As shown in Figure 2, each of the wheels 2FL, 2FR, 2RL and 2RR is provided with a brake 23 comprising a disk rotor 23a which rotates together wish the wheel and a caliper 23b which brakes the disk rotor 23a when applied with brake fluid pressure.

The ABS controls the brake fluid pressure applied to each brake 23 from the brake fluid pressure applied to the other brakes 23. The ABS comprises an acceleration sensor 24 for detecting deceleration of the vehicle 1, wheel speed sensors 25 each for detecting the wheel speed of each wheel, an ABS control unit U2 which receives the outputs of the sensors 24 and 25, hydraulic pressure control valves 26 which control the brake fluid pressures applied to the respective brakes 23 on the basis of control signals given to the respective hydraulic pressure control valves 26 from the ABS control unit U2, and a hydraulic unit (not shown) which supplies brake fluid to the hydraulic pressure control valves 26 at a regulated pressure.

The ABS control unit U2 determines, on the basis of predetermined one of the rotational speeds of the wheels 2FL, 2FR, 2RL and 2RR detected by the wheel speeds sensors 25, e.g., the highest speed, a reference rotational speed at which a predetermined slip ratio between the road surface and the wheel is obtained and a maximum braking takes place for a given vehicle speed. Then the ABS control unit U2 compares the respective rotational speeds with the reference rotational speed and controls the brake fluid pressure to the respective brakes 23 to prevent skid or lock of each wheel by way of the hydraulic pressure valves 26 .

As shown in Figures 1 and 2 the ABS control unit U2 outputs to the rear wheel control unit U1 a signal S which represents the friction coefficient $\mu$ of the road surface and whether the ABS is operating, and the rear wheel control unit U1 changes the rear wheel turning angle ratio characteristic according to the operating condition of the ABS for the respective brakes 23.

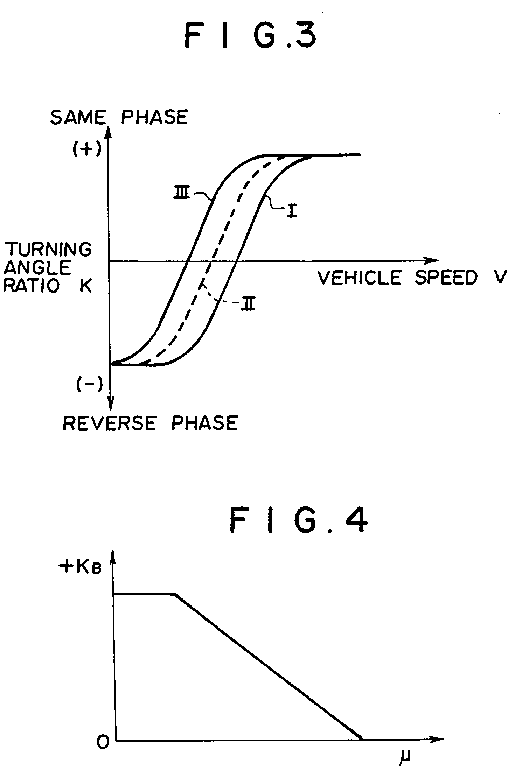

Figure 3 shows the rear wheel turning angle ratio characteristics set by the rear wheel turning angle control system provided in the rear wheel control unit U1. Curve I represents a normal rear wheel turning angle ratio characteristic which is set according to the vehicle speed V when the ABS is not operating, curve II represents a corrected rear wheel turning angle ratio characteristic which is set when the ABS is operating and is obtained by correcting the normal rear wheel turning angle ratio characteristic curve I with a correction value KA which is a positive constant. In this particular embodiment, the vehicle 1 is supposed to be a front-engine rear-drive vehicle, and the correction value KA is added to a rear wheel turning angle ratio K given according to the normal rear wheel turning angle ratio characteristic curve I so that the rear wheel turning angle ratio characteristic curve shifts toward the same phase side. The rear wheel turning angle ratio K is defined to be positive in the same phase and negative in the reverse phase. In the case of a front-engine front-drive vehicle, the correction value KA is subtracted from a rear wheel turning angle ratio K given according to the normal rear wheel turning angle ratio characteristic curve I so that the rear wheel turning angle ratio characteristic curve shifts toward the reverse phase side as represented by curve II'.

The corrected rear wheel turning angle ratio characteristic represented by the curve II which is set when the ABS is operating is further corrected with a friction-based correction value KB so that the rear wheel turning angle ratio characteristic curve shifts toward the same phase side as represented by curve III. The friction-based correction value KB is changed according to the friction coefficient $\mu$ of the road surface determined by the ABS control unit U2 as shown in Figure 4. As can be seen from Figure 4, when the friction coefficient $\mu$ of the road surface is higher than the value at which the deceleration of the vehicle body upon application of the brakes is, for instance, -0.2G, the friction-based correction value KB is nullified. Normally the correction value KA is larger than the correction value KB in absolute value. Accordingly, when the ABS is operating, the rear wheel turning angle ratio KT is represented by formula KT = K + KA + KB. In the case of a front-engine front-drive vehicle, the rear wheel turning angle ratio KT is represented by formula KT = K-KA + KB.

In this embodiment, the correction of the rear wheel turning angle ratio characteristic with the correction value KA is not released soon after interruption of the operation of the ABS until the running condition of the vehicle is stabilized. That is, a timer is set upon interruption of the operation of the ABS and the correction of the rear wheel turning angle ratio characteristic with the correction value KA is held for a predetermined time after interruption of the operation of the ABS until the timer times out, though it is released when the running of the vehicle is stabilized or the vehicle speed approaches zero while the brake pedal is pushed even before the timer times out. The correction with the friction-based correction value KB is not released even after release of the correction with the correction value KA and the friction-based correction value KB is up-dated on the basis of the friction coefficient $\mu$ of the road surface determined in the next operation of the ABS.

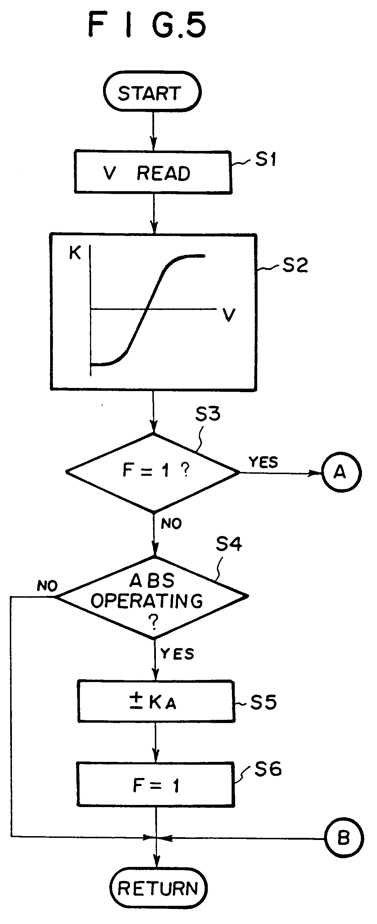

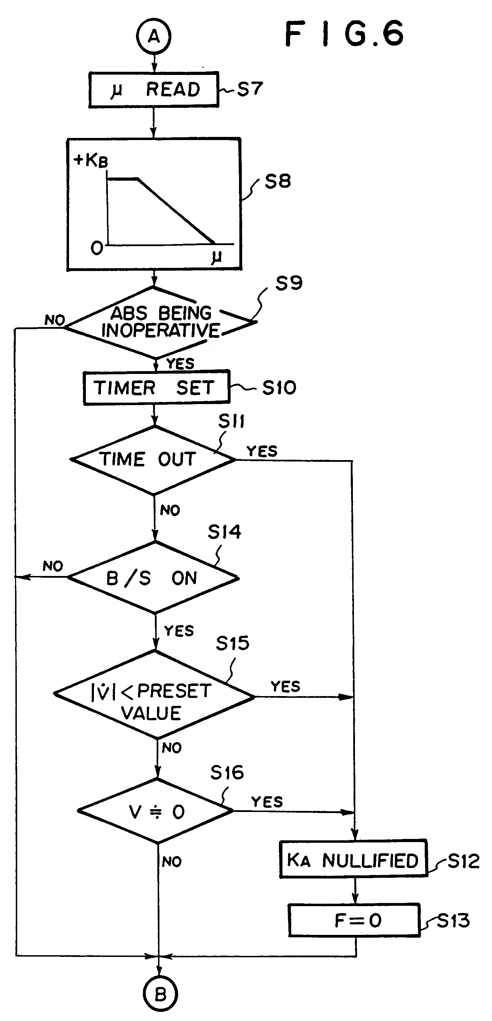

The rear wheel turning angle ratio correction routine executed by the rear wheel control unit U1 will be described with reference to the flow charts shown in Figures 5 and 6, hereinbelow.

As shown in Figure 5, the rear wheel control unit U1 first reads the vehicle speed V and sets the rear wheel turning angle ratio K according to the curve I (in Figure 3) on the basis of the vehicle speed V. (steps S1 and S2) Then the rear wheel control unit U1 determines in step S3 whether flag F has been 1, the flag F being set to 1 when the correction of the rear wheel turning angle ratio characteristic with the correction value KA is performed. When it is determined that the flag F has not been 1, i.e., F = 0, the rear wheel control unit U1 determines in step S4 whether the ABS is operating. When it is determined that the ABS is not operating, the rear wheel control unit U1 returns to step S1. Otherwise the rear wheel control unit U1 corrects the rear wheel turning angle ratio K set in step S2 with the correction value KA and sets the flag F to 1. (steps S5 and S6) Then the rear wheel control unit U1 returns to step S1. In the next flow, the answer to the question in step S3 becomes to YES, and accordingly, the rear wheel control unit U1 proceeds after step S3 to step S7 in Figure 6. In step S7, the rear wheel control unit U1 reads the friction coefficient $\mu$ of the road surface. Then in step S8, the rear wheel control unit U1 determines the friction-based correction value KB according to the map shown in Figure 4 and adds it to the corrected rear wheel turning angle ratio (K±KA + KB). In step S9, the rear wheel control unit U1 determines whether the operation of the ABS has been interrupted. When it is determined that the operation of the ABS has not been interrupted, the rear wheel control unit U1 returns to step S1.

On the other hand, when it is determined in step S9 that the operation of the ABS has been interrupted, the rear wheel control unit U1 sets a timer which times out after a predetermined time (one to two minutes). (step S10) Then in step S11, the rear wheel control unit U1 determines whether the timer has timed out, and when it is determined that the timer has timed out, the rear wheel control unit U1 nullifies the correction value KA and returns after setting the flag F to 0. (steps S12 and S13) When it is determined in step S11 that the timer has not timed out, the rear wheel control unit U1 determines in step S14 whether the brake pedal has been pushed (whether a brake switch is on). When the brake has been pushed, the rear wheel control unit U1 nullifies the correction value KA and sets the flag F to 0 even before the timer times out (steps S12 and S13) so long as the deceleration |V| of the vehicle has been lower than a predetermined value for a predetermined time or the vehicle speed is substantially 0. (steps S15 and S16)

In this embodiment, hunting phenomenon upon interruption of the ABS is prevented in the manner described above, thereby ensuring running stability of the vehicle.

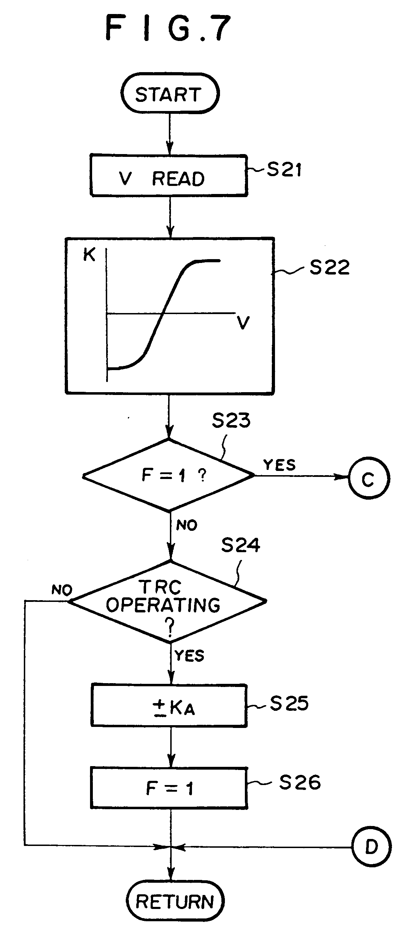

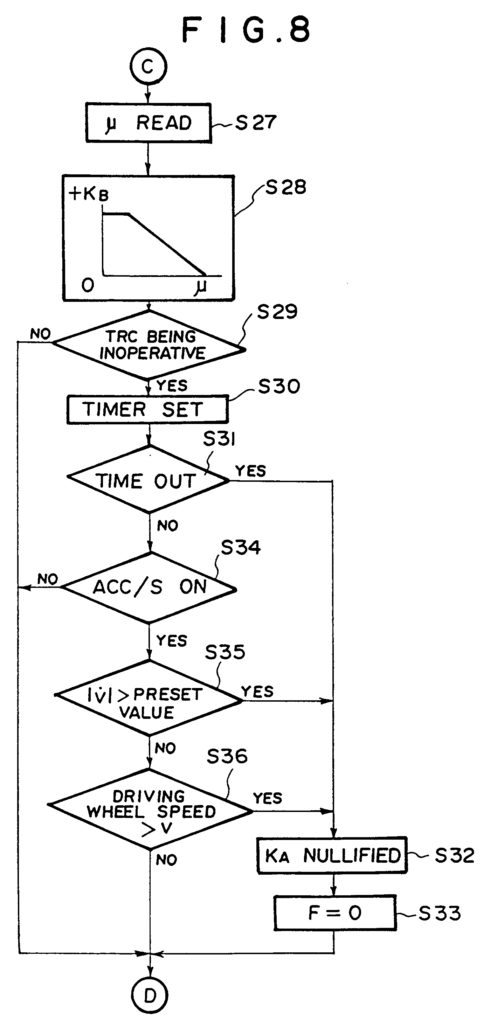

Now another embodiment of the present invention in which a traction control system is employed as the slip control system will be described, hereinbelow. The rear wheel turning system of this embodiment is mechanically substantially the same as the preceding embodiment and mainly differs therefrom in the operation of the rear wheel control unit U1. In the TRC, light braking of the driving wheels and/or throttle control of the engine is effected in order to prevent slip of the driving wheels during start or hard acceleration of the vehicle. The rear wheel turning angle ratio correction routine to be executed by the rear wheel control unit U1 in this embodiment will be described with reference to the flow chart shown in Figures 7 and 8, hereinbelow.

Steps S21 to S36 in the flow chart shown in Figures 7 and 8 are the same as steps S1 to S16 in the flow chart shown in Figures 5 and 6 except that the question in step S24 is whether the TRC is operating, the question in step S29 is whether the TRC is not operating, the question in step S34 is whether the accelerator is pushed down (whether an accelerator switch is on), the question in step S35 is whether the acceleration |V| of the vehicle has been higher than a predetermined value for a predetermined time and the question in step S36 is whether the driving wheel speed is substantially equal to the vehicle speed.

In a still another embodiment of the present invention, the correction of the rear wheel turning angle ratio characteristic with the correction value KA is released soon after interruption of the operation of the ABS but the correction with the friction-based correction value KB is not released even after release of the correction with the correction value KA and the friction-based correction value KB is up-dated on the basis of the friction coefficient $\mu$ of the road surface determined in the next operation of the ABS. However, if the absolute value of the lateral acceleration G during cornering increases to a value which is too large in view of the known maximum value of the friction coefficient $\mu$, e.g., a value larger than 0.3G, the friction-based correction value KB is nullified.

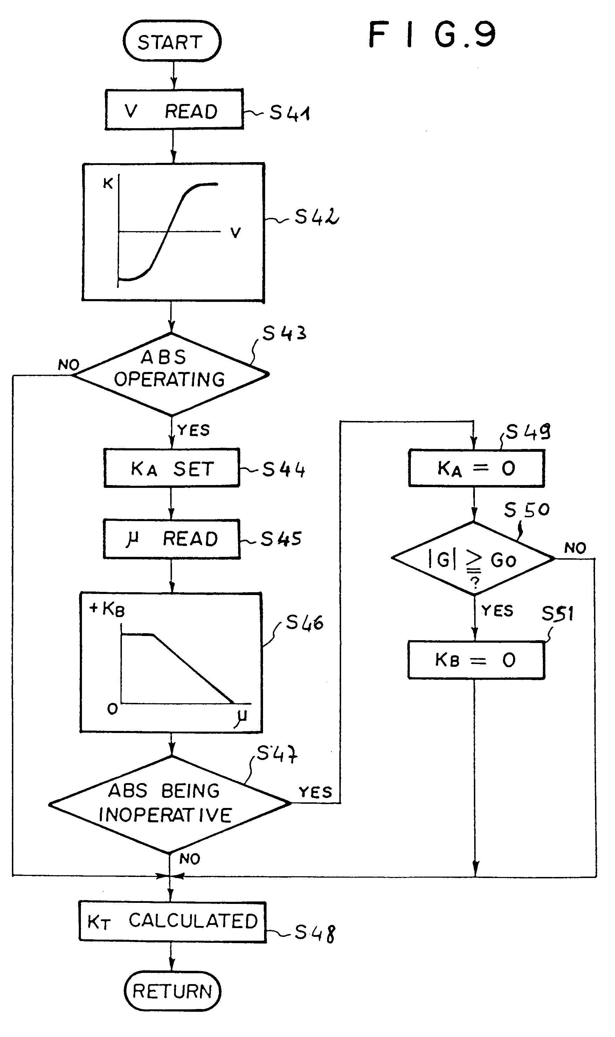

As shown in Figure 9, the rear wheel control unit U1 first reads the vehicle speed V and sets the rear wheel turning angle ratio K according to the curve I (in Figure 3) on the basis of the vehicle speed V. (steps S41 and S42) Then the rear wheel control unit U1 determines in step S43 whether the ABS is operating. When it is determined that the ABS is not operating, the rear wheel control unit U1 returns to step S41 after setting the rear wheel turning angle ratio KT to K in step S48. Otherwise the rear wheel control unit U1 sets the correction value KA. (step S44) In step S45, the rear wheel control unit U1 reads the friction coefficient $\mu$ of the road surface. Then in step S46, the rear wheel control unit U1 determines the friction-based correction value KB according to the map shown in Figure 4. In step S47, the rear wheel control unit U1 determines whether the operation of the ABS has been interrupted. When it is determined that the operation of the ABS has not been interrupted, the rear wheel control unit U1 returns to step S41 after setting the rear wheel turning angle ratio KT to $K + KA + KB$ in step S48.

On the other hand, when it is determined in step S47 that the operation of the ABS has been interrupted, the rear wheel control unit U1 nullifies, the correction value KA in step S49 and then determines in step S50 whether the absolute value of the lateral acceleration G is not smaller than a predetermined value Go. When it is determined that the former is smaller than the latter, the rear wheel control unit U1 sets the rear wheel turning angle ratio KT to $K + KB$ in step S48. The value of the friction-based correction value KB is up-dated on the basis of the determination in step S46 in the next operation of the ABS. On the other hand, when it is determined that the absolute value of the lateral acceleration G is not smaller than a predetermined value Go, it is considered that the running condition of the vehicle has been stabilized and the friction-based correction value KB is nullified in step S51. Accordingly the rear wheel control unit U1 sets the rear wheel turning angle ratio KT to K in step S48.

Though, in the embodiment described above, the present invention is applied to a four-wheel-steered vehicle provided with an ABS, the present invention can also be applied to a four-wheel-steered vehicle provided with a TRC system.

## Claims

1. A rear wheel turning system for a four-wheel-steered vehicle (1) provided with a slip control system (U2) such as an anti-skid brake system or a traction control system comprising

   a rear wheel turning mechanism (U1) which turns rear wheels of the vehicle in response to turning of front wheels of the vehicle according to a predetermined rear wheel turning characteristic, and

   a rear wheel turning characteristic correcting means (U1) which corrects the rear wheel turning characteristic substantially in response to initiation of operation of the slip control system (U2),

   **characterized** in that

   a correction holding means (timer) is provided to hold the corrected rear wheel turning characteristic until a predetermined condition is satisfied after interruption of the operation of the slip control system, and

   said rear wheel turning mechanism turns rear wheels of the vehicle on the basis of the corrected rear wheel turning characteristic until the predetermined condition is satisfied after interruption of the operation of the slip control system.

2. A rear wheel turning system as defined in claim 1 in which said correction holding means (timer) holds the corrected rear wheel turning characteristic until a predetermined time lapses after interruption of the operation of the slip control system.

3. A rear wheel turning system as defined in claim 1 in which the slip control system (U2) is an anti-skid brake system, and the correction holding means holds the corrected rear wheel turning characteristic until the deceleration of the vehicle continues to be smaller than a predetermined value for a predetermined time with the brake pedal pushed down.

4. A rear wheel turning system as defined in claim 1 in which the slip control system (U2) is an anti-skid brake system, and the correction holding means holds the corrected rear wheel turning characteristic until the vehicle speed approaches zero.

5. A rear wheel turning system as defined in claim 1 in which the slip control system (U2) is a traction control system, and the correction holding means holds the corrected rear wheel turning characteristic until the acceleration of the vehicle continues to be larger than a predetermined value for a predetermined time with the accelerator pedal pushed down.

6. A rear wheel turning system for a four-wheel-steered vehicle provided with a slip control system (U2) such as an anti-skid brake system or a traction control system comprising a rear wheel turning mechanism (U1) which turns rear wheels of the vehicle in response to turning of front wheels of the vehicle according to a predetermined rear wheel turning characteristic, a first correcting means (KA) which corrects the rear wheel turning characteristic substantially in response to initiation of operation of the slip control system, and a second correcting means (KB) which corrects the rear wheel turning characteristic on the basis of the road surface condition ($\mu$) determined during operation of the slip control system, **characterized** in that a correction holding means (timer) is provided to hold the rear wheel turning characteristic which is corrected by the second correcting means and which has been corrected by the first correcting means (KA), said corrected rear wheel turning characteristic is further corrected by the second correcting means (KB) after the operation of the slip control system is interrupted, and said rear wheel turning mechanism turns the rear wheels of the vehicle on the basis of the rear wheel turning characteristic, which is corrected by the second correcting means after the operation of the slip control system is interrupted.

7. A rear wheel turning system as defined in claim 6 further comprising a means which changes the road surface condition which is determined during one operation of the slip control system on the basis of which the second correcting means (KB) corrects the rear wheel turning characteristic to the road surface condition determined upon initiation of the operation next to said one operation of the slip control system.

8. A rear wheel turning system as defined in claim 6 further comprising a means which releases the correction by the second correcting means (KB) when the lateral acceleration of the vehicle during cornering exceeds a predetermined value.

**Patentansprüche**

1. Hinterradlenksystem für ein vierrad-gelenktes Fahrzeug (1), welches vorgesehen ist mit einem Schlupfregelsystem (U2), z.B. ein Anti-Schleuder-Bremssystem oder ein Traktionsregelsystem, welches umfaßt:
einen Hinterradlenkmechanismus (U1), welcher die Hinterräder des Fahrzeugs in Antwort auf das Lenken der Vorderräder des Fahrzeugs gemäß einer vorbestimmten Hinterradlenkcharakteristik lenkt, und
eine Hinterradlenkcharakteristik-Korrektureinrichtung (U1), welche die Hinterradlenkcharakteristik im wesentlichen in Antwort auf den Beginn des Betriebes des Schlupfregelsystems (U2) korrigiert,
dadurch gekennzeichnet, daß
eine Korrekturhalteeinrichtung (Timer) vorgesehen ist, um die korrigierte Hinterradlenkcharakteristik zu halten, bis eine vorbestimmte Bedingung erfüllt ist, und zwar nach der Unterbrechung des Betriebes des Schlupfregelsystems, und
daß der Hinterradlenkmechanismus die Hinterräder des Fahrzeuges auf der Basis der korrigierten Hinterradlenkcharakteristik lenkt, bis die vorbestimmte Bedingung erfüllt ist, und zwar nach der Unterbrechung des Betriebes des Schlupfregelsystems.

2. Hinterradlenksystem gemäß Anspruch 1, bei dem die Korrekturhalteeinrichtung (Timer) die korrigierte Hinterradlenkcharakteristik hält, bis eine vorbestimmte Zeit nach der Beendigung des Betriebes des Schlupfregelsystems vergangen ist.

3. Hinterradlenksystem gemäß Anspruch 1, bei dem das Schlupfregelsystem (U2) ein Anti-Schleuder-Bremssystem ist und die Korrekturhalteeinrichtung die korrigierte Hinterradlenkcharakteristik hält, bis die Verzögerung des Fahrzeuges kleiner bleibt als ein vorbestimmter Wert für eine vorbestimmte Zeit, wobei das Bremspedal heruntergedrückt ist.

4. Hinterradlenksystem gemäß Anspruch 1, bei dem das Schlupfregelsystem (U2) ein Anti-Schleuder-Bremssystem ist und die Korrektur-halteeinrichtung die korrigierte Hinterradlenk-charakteristik hält, bis die Fahrzeuggeschwin-digkeit sich Null nähert.

5. Hinterradlenksystem gemäß Anspruch 1, bei dem das Schlupfregelsystem (U2) ein Trak-tionsregelsystem ist und die Korrekturhaltein-richtung die korrigierte Hinterradlenkcharakteri-stik hält, bis die Beschleunigung des Fahrzeuges größer bleibt als ein vorbestimmter Wert für eine vorbestimmte Zeit, wobei das Gaspedal heruntergedrückt ist.

6. Hinterradlenksystem für ein vierrad-gelenktes Fahrzeug, welches mit einem Schlupfregelsystem (U2), z.B. ein Anti-Schleuder-Bremssy-stem oder ein Traktionsregelsystem, vorgese-hen ist, welches umfaßt:
   einen Hinterradlenkmechanismus (U1), welcher die Hinterräder des Fahrzeugs in Antwort auf das Lenken der Vorderräder des Fahrzeugs gemäß einer vorbestimmten Hinterradlenkcharakteristik lenkt,
   eine erste Korrektureinrichtung (KA), welche die Hinterradlenkcharakteristik im wesentlichen in Antwort auf den Beginn des Betriebes des Schlupfregelsystems korrigiert, und
   eine zweite Korrektureinrichtung (KB), welche die Hinterradlenkcharakteristik auf der Basis des Straßenflächenzustandes (μ) korrigiert, welcher durch den Betrieb des Schlupfregelsystems bestimmt wird,
   dadurch gekennzeichnet, daß
   eine Korrekturhalteeinrichtung (Timer) vorgesehen ist, um die Hinterradlenkcharakteristik zu halten, welche durch die zweite Korrektureinrichtung korrigiert wird und welche durch die erste Korrektureinrichtung (KA) korrigiert wur-de, wobei die korrigierte Hinterradlenkcharakte-ristik weiterhin korrigiert wird durch die zweite Korrektureinrichtung (KB), nachdem der Betrieb des Schlupfregelsystems unterbrochen wird, und
   wobei der Hinterradlenkmechanismus die Hinterräder des Fahrzeuges auf der Basis der Hinterradlenkcharakteristik lenkt, welche durch die zweite Korrektureinrichtung korrigiert wird, nachdem der Betrieb des Schlupfregelsystems unterbrochen wird.

7. Hinterradlenksystem gemäß Anspruch 6, welches weiterhin umfaßt eine Einrichtung, welche den Straßenflächenzustand verändert, welcher während eines Betriebes des Schlupfregelsystems bestimmt wird, und zwar auf der Basis von welchem die zweite Korrektureinrichtung (KB) die Hinterradlenkcharakteristik gemäß dem Straßenflächenzustand korrigiert, welcher bei Beginn des Betriebes benachbart zu dem einen Betrieb des Schlupfregelsystems bestimmt wird.

8. Hinterradlenksystem gemäß Anspruch 6, welches weiterhin eine Einrichtung umfaßt, welche die Korrektur durch die zweite Korrektureinrichtung (KB) freigibt, wenn die Querbeschleunigung des Fahrzeuges während der Kurvenfahrt einen vorbestimmten Wert überschreitet.

**Revendications**

1. Système de braquage de roues arrière pour un véhicule à quatre roues directrices (1) muni d'un système de contrôle du glissement (U2) tel qu'un système de freinage antiblocage ou un système de contrôle de traction comprenant
   un mécanisme de braquage des roues arrière (U1) qui braque les roues arrière du véhicule en réponse au braquage des roues avant du véhicule en fonction d'une caractéristique de braquage des roues arrière prédéterminée, et
   un moyen de correction de la caractéristique de braquage des roues arrière (U1) qui corrige la caractéristique de braquage des roues arrière en réponse substantiellement au commencement du fonctionnement du système de contrôle du glissement (U2),
   caractérisé en ce que
   un moyen de suspension de correction (minuterie) est ménagé pour suspendre la caractéristique de braquage des roues arrière jusqu'à ce qu'une condition prédéterminée soit satisfaite après l'arrêt du fonctionnement du système de contrôle du glissement, et
   ledit mécanisme de braquage des roues arrière braque les roues arrière du véhicule sur la base de la caractéristique corrigée de braquage des roues arrière jusqu'à ce que la condition prédéterminée soit satisfaite après l'arrêt du fonctionnement du système de contrôle du glissement.

2. Système de braquage de roues arrière selon la revendication 1 dans lequel ledit moyen de suspension de la correction (minuterie) suspend la caractéristique corrigée de braquage des roues arrière jusqu'à ce qu'une durée prédéterminée s'écoule après l'arrêt du fonctionnement du système de contrôle du glissement.

3. Système de braquage de roues arrière selon la revendication 1 dans lequel le système de contrôle du glissement (U2) est un système de freinage antiblocage, et le moyen de suspension de la correction suspend la caractéristique corrigée de braquage des roues arrière jusqu'à ce que la décélération du véhicule continue à être plus petite qu'une valeur prédéterminée pendant une durée prédéterminée avec la pédale de freinage enfoncée.

4. Système de braquage de roues arrière selon la revendication 1 dans lequel le système de contrôle du glissement (U2) est un système de freinage antiblocage, et le moyen de suspension de la correction suspend la caractéristique corrigée de braquage des roues arrière jusqu'à ce que la vitesse du véhicule approche de zéro.

5. Système de braquage de roues arrière selon la revendication 1 dans lequel le système de contrôle du glissement (U2) est un système de contrôle de traction, et le moyen de suspension de correction suspend la caractéristique corrigée de braquage des roues arrière jusqu'à ce que l'accélération du véhicule continue à être plus grande qu'une valeur prédéterminée pendant une durée prédéterminée avec la pédale de l'accélérateur enfoncée.

6. Système de braquage de roues arrière pour un véhicule à quatre roues directrices muni d'un système de contrôle du glissement (U2) tel qu'un système de freinage antiblocage ou un système de contrôle de traction comprenant un mécanisme de braquage des roues arrière (U1) qui braque les roues arrière du véhicule en réponse au braquage des roues avant du véhicule en fonction d'une caractéristique de braquage des roues arrière prédéterminée, un premier moyen de correction (KA) qui corrige la caractéristique de braquage des roues arrière en réponse substantiellement au commencement du fonctionnement du système de contrôle du glissement, et un second moyen de correction (KB) qui corrige la caractéristique de braquage des roues arrière sur la base de la condition de surface de la route (μ) déterminée durant le fonctionnement du système de contrôle du glissement, caractérisé en ce que un moyen de suspension de correction (minuterie) est ménagé pour suspendre la caractéristique de braquage des roues arrière qui est corrigée par le second moyen de correction et qui a été corrigée par le premier moyen de correction ( KA), ladite caractéristique corrigée de braquage des roues arrière étant en outre corrigée par le second moyen de correction (KB) après l'arrêt du fonctionnement du système de contrôle du glissement, et

ledit mécanisme de braquage des roues arrière braque les roues arrière du véhicule sur la base de la caractéristique de braquage des roues arrière qui est corrigée par le second moyen de correction après l'arrêt du fonctionnement du système de contrôle du glissement.

7. Système de braquage de roues arrière selon la revendication 6 comprenant en outre un moyen qui change la condition de surface de la route qui est déterminée durant un fonctionnement du système de contrôle du glissement sur la base duquel le second moyen de correction (KB) corrige la caractéristique de braquage des roues arrière par la condition de surface de la route déterminée par le commencement du fonctionnement suivant ledit fonctionnement du système de contrôle du glissement.

8. Système de braquage selon la revendication 6 comprenant en outre un moyen qui déclenche la correction par ledit second moyen de correction (KB) lorsque l'accélération latérale du véhicule durant la négociation d'un virage dépasse une valeur prédéterminée.

# F I G.1

# FIG.2

EP 0 508 431 B1

# F I G. 3

# F I G. 4

# F I G.5

# F I G.6

(A)

μ READ — S7

S8

ABS BEING INOPERATIVE — S9

NO

YES

TIMER SET — S10

S11

TIME OUT

YES

NO

S14

B/S ON

NO

YES

S15

$|\dot{V}| <$ PRESET VALUE

YES

NO

S16

$V \doteqdot 0$

YES

NO

Kₐ NULLIFIED — S12

F = 0 — S13

(B)

# F I G.7

START

V READ — S21

S22

S23

F = 1 ? — YES → C

NO

S24

T R C OPERATING ? — NO

YES

± KA — S25

F = 1 — S26

D

RETURN

16

# F I G . 8

C

μ READ ~ S27

S28

+K_B

O                    μ

S29

TRC BEING
INOPERATIVE

NO

YES   S30

TIMER SET

S31

TIME OUT   YES

NO

S34

ACC/S ON

NO

YES   S35

$|\dot{v}| > $ PRESET
VALUE   YES

NO   S36

DRIVING
WHEEL SPEED
> V   YES

NO

K_A NULLIFIED ~ S32

F = 0 ~ S33

D

17

# F I G.9